Europäisches Patentamt

European Patent Office

Office européen des brevets

(11) Veröffentlichungsnummer : **0 173 872**
**B1**

(12) EUROPÄISCHE PATENTSCHRIFT

(45) Veröffentlichungstag der Patentschrift :
09.11.88

(51) Int. Cl.⁴ : **B 29 C 47/00**, B 29 D 23/00,
B 05 D 7/22 // B29L23:00

(21) Anmeldenummer : 85109814.5

(22) Anmeldetag : 05.08.85

(54) Innenbestäubung von Folienschläuchen aus Thermoplasten.

(30) Priorität : 16.08.84 DE 3429963

(43) Veröffentlichungstag der Anmeldung :
12.03.86 Patentblatt 86/11

(45) Bekanntmachung des Hinweises auf die Patenterteilung : 09.11.88 Patentblatt 88/45

(84) Benannte Vertragsstaaten :
DE FR NL

(56) Entgegenhaltungen :
GB-A- 849 070
US-A- 3 260 776

(73) Patentinhaber : Wolff Walsrode Aktiengesellschaft
Postfach
D-3030 Walsrode 1 (DE)

(72) Erfinder : Renger, Wolfgang, Dipl.-Ing.
Zur Beeke 3
D-3036 Bomlitz-Bommelsen (DE)

(74) Vertreter : Zobel, Manfred, Dr. et al
c/o BAYER AG Konzernverwaltung RP Patentabteilung Bayerwerk
D-5090 Leverkusen (DE)

## Beschreibung

Die vorliegende Erfindung betrifft ein Verfahren zum Antiblockausrüsten von thermoplastischen Folienschläuchen direkt bei ihrer Herstellung, indem man zur Kühlung des Inneren der Schlauchhülle unmittelbar nach dem Extrudieren eine wäßrige Suspension verwendet, die ein Trennmittel enthält.

Folienschläuche aus Polyvinylidenchlorid (PVDC) neigen aufgrund der glatten Oberflächen zum Verblocken. Die Schläuche können dann nur unter Zuhilfenahme von Klebestreifen z. B. zum Füllen geöffnet werden.

Üblicherweise werden Schläuche aus Thermoplasten so hergestellt, daß das thermoplastische Material mittels einer Ringdüse extrudiert und anschließend in einem Wasserbad innen und außen gekühlt wird. Als Innenkühlmittel wird in der Regel eine Wasser-Öl-Emulsion verwendet. Diese Emulsion verhindert zwar das Aneinanderkleben der Schlauchinnenseiten nach der Extrusion, vermag jedoch nicht das Verblocken der fertigen Schlauchhülle zu verhindern. Deshalb wurde versucht, diese Schwierigkeit durch Aufbringen eines Antiblockmittels auf die Innenseite der fertigen Schlauchhülle zu beheben.

Gemäß der Lehre der EP 0 018 167 geschieht dies in einem zusätzlichen Arbeitsgang, indem dem Innenraum eines sich bewegenden Folienschlauches aus einem im Innenraum untergebrachten Vorratsbehälter Bestäubungsmittel zugeführt wird, das durch Zentrifugalkraft zerstreut wird.

Die dem Oberbegriff des Anspruches 1 entsprechende US-A-3 260 776 bezieht sich auf verschiedene Verfahren zur Herstellung von biaxial gereckten Polypropylenschlauchfolien. Nach der Extrusion wird gemäß Spalte 2, Zeile 54 das Innere mit einer Flüssigkeit («liquid»), insbesondere einem Glykol gefüllt. Die Verwendung von Wasser ist ausdrücklich weniger bevorzugt (Spalte 2, Zeile 57). Nur beiläufig wird erwähnt, daß ein «small amount of anti-tack material» zugegeben werden kann. Über Mengen und Teilchengröße eines derartigen Trennmittels wird nichts gesagt.

Es war bisher aber nicht möglich, solche Schläuche direkt bei ihrer Herstellung antiblockierend auszurüsten.

Gegenstand der Erfindung ist ein Verfahren zum Antiblockausrüsten von Folienschläuchen aus PVDC nach dem kennzeichnenden Teil des Anspruches, bei dem man den noch weitgehend schmelzflüssigen Schlauch unmittelbar nach seiner Extrusion innenseitig mit einer wäßrigen Suspension kühlt, wobei die Suspension als Trennmittel Talkum, $CaCO_3$ oder $SiO_2$ in Mengen von 20 bis 60 Gew.-Teilen enthält und der mittlere Teilchendurchmesser des Trennmittels 1 bis 30 $\mu$m beträgt.

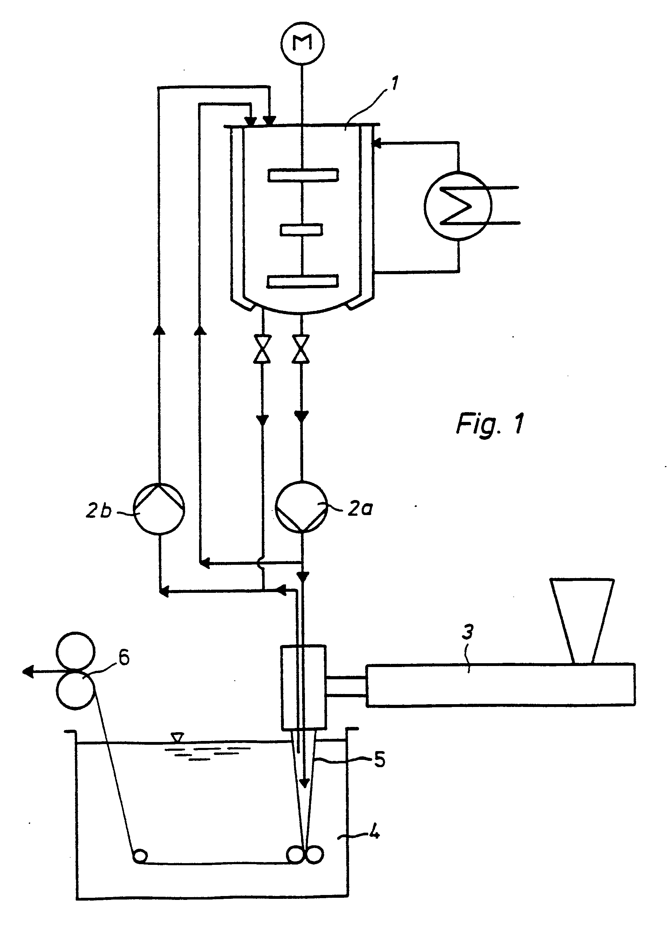

Vorzugsweise kann das erfindungsgemäße Verfahren zum Antiblockausrüsten von Folienschläuchen aus PVDC, nach dem Schema, dargestellt in Fig. 1, durchgeführt werden. Dabei wird in einem doppelwandigen Rührbehälter (1) die Trennmittelsuspension unter ständigem Rühren vorgelegt. Die Flüssigkeit im Vorlagebehälter (1) ist kühlbar, um die Temperatur der Flüssigkeit bei der Produktion konstant zu halten und ein gleichmäßiges Quentchen des Extrudats gewährleisten zu können. Mittels einer Pumpe (2a) wird die Suspension durch die Ringdüse eines Extruders (3) in den frisch extrudierten Schlauch (5) geleitet. Eine zweite Pumpe (2b) saugt gleichzeitig die überschüssige Suspension ab. Der weitgehend schmelzflüssige Strang wird außenseitig in einem Wasserbad (4) und innenseitig mittels der temperierten Suspension abgekühlt.

Durch den nachgeschalteten Abquetschvorgang mit den Quetschwalzen (6) wird das Wasser vom Trennmittel entfernt.

Überraschenderweise wurde gefunden, daß dadurch das in der Suspension befindliche Trennmittel an der Schlauchinnenseite gleichmäßig haftet und dadurch als Öffnungshilfe dient. Das anhaftende Puder stört den weiteren Verarbeitungsprozeß nicht.

Die wäßrige Suspension enthält feinverteilt als Trennmittel Talkum, $CaCO_3$ oder $SiO_2$ mit einem mittleren Teilchendurchmesser von 1 bis 30 $\mu$m vorzugsweise 5-20 $\mu$m. Neben 20 bis 60, vorzugsweise 30 bis 40 Gew.-Teilen Puder, kann die Suspension noch bekannte Suspendierhilfsmittel wie Sorbitanmonooleat, Glycerinmonostearat oder Sorbitanmonopalmitat enthalten.

Die Zuführung der Suspensionen in das Innere des noch weitgehend schmelzflüssigen Folienschlauches erfolgt mit einer Geschwindigkeit von 0,05 bis 0,8 l/min vorzugsweise 0,15 bis 0,5 l/min.

### Beispiel

PVDC mit üblichen Zusätzen wird in einem Extruder bei 153 °C aufgeschmolzen. Die Schmelze wird durch eine Ringdüse (Ø 47/50 mm) zu einem Schlauch extrudiert und in ein Wasserbad geleitet. Die Temperatur des Wasserbades beträgt 20 °C. Innenseitig wird der Schlauch durch eine Trennmittelsuspension abgekühlt, die aus einem Vorratsbehälter in das Schlauchinnere gepumpt wird. Die Trennmittelsuspension setzt sich wie folgt zusammen :

72 Gew.-% Wasser

27,8 Gew.-% $CaCO_3$-Puder mittlerer Teilchendurchmesser 10 $\mu$m

0,2 Gew.-% Sorbitanmonolaurat

Die Trennmittelsuspension wird mittels eines Pumpensystems im Schlauchinnenraum unterhalb der Düse umgepumpt. In einem nachgeschalteten Abquetschvorgang wird der Schlauch zusammengelegt und das Wasser abgequetscht.

Die Schlauchinnenseiten verblocken auch bei längerer kontinuierlicher Herstellung nicht. Messungen nach der aufgetragenen Pudermenge weisen auf eine homogene Puderverteilung hin.

| Messungen nach xm Schlauchfertigung | aufgetragene Puder- menge in g/m$_2$ |
|---|---|
| X | |
| 100 | 0,32 |
| 200 | 0,33 |
| 300 | 0,29 |
| 400 | 0,30 |
| 500 | 0,32 |
| 600 | 0,32 |
| 700 | 0,29 |
| 800 | 0,33 |
| 900 | 0,31 |
| 1 000 | 0,30 |

## Patentansprüche

1. Verfahren zum Antiblockausrüsten von Folienschläuchen aus thermoplastischem Material, bei dem man den Folienschlauch nach der Extrusion innen mit einer ein Trennmittel enthaltenden Suspension behandelt und anschließend überschüssige Suspension aus dem Inneren des Schlauches absaugt und den in einem Wasserbad (4) auch außen gekühlten Schlauch (5) mittels Abquetschwalzen von anhaftenden Flüssigkeitsresten befreit, dadurch gekennzeichnet, daß der Folienschlauch aus Polyvinylidenchlorid hergestellt wird der Folienschlauch innenseitig mit einer wäßrigen Suspension behandelt wird, die als Trennmittel Talkum, CaCO$_3$ oder SiO$_2$ in Mengen von 20 bis 60 Gew.-Teilen enthält, wobei der mittlere Teilchendurchmesser des Trennmittels 1 bis 30 µm beträgt und wobei der noch weitgehend schmelzflüssige Schlauch unmittelbar nach der Extrusion innenseitig mit der Suspension behandelt wird.

2. Verfahren nach Anspruch 1, dadurch gekennzeichnet, daß die Suspension das Trennmittel in Mengen von 30 bis 40 Gew.-Teilen enthält.

3. Verfahren nach wenigstens einem der vorhergehenden Ansprüche, dadurch gekennzeichnet, daß die wäßrige Suspension in den noch weitgehend schmelzflüssigen Folienschlauch mit einer Geschwindigkeit von 0,05 bis 0,8 l/min zugeführt wird.

4. Verfahren nach wenigstens einem der vorhergehenden Ansprüche, dadurch gekennzeichnet, daß die wäßrige Suspension mit einer Geschwindigkeit von 0,15 bis 0,5 l/min zugeführt wird.

## Claims

1. Process for providing film tubes of thermoplastic material with an anti-blocking finish, in which the film tube, after extrusion, is treated on the inside with a suspension containing an adherent and excess suspension is then withdrawn from the inside of the tube by suction and the tube (5) which is also cooled on the outside in a water bath (4) is freed from adherent liquid remains by means of squeezing rollers, characterised in that
— the film tube is produced from polyvinylidene chloride,
— the film tube is treated on the inside with an aqueous suspension which contains,
— talcum, CaCO$_3$ or SiO$_2$ as the adherent,
— in quantities of 20 to 60 parts by weight,
— the average particle diameter of the a herent being 1 to 30 µm and
— the still substantially molten tube being treated on the inside with the suspension immediately after extrusion.

2. Process according to Claim 1, characterised in that the suspension contains the adherent in quantities of 30 to 40 parts by weight.

3. Process according to at least one of the preceding claims, characterised in that the aqueous suspension is introduced into the still substantially molten film tube with a speed of 0.05 to 0.8 l/min.

4. Process according to at least one of the preceding claims, characterised in that the aqueous suspension is introduced with a speed of 0.15 to 0.5 l/min.

## Revendications

1. Procédé pour la finition antiblocage de tuyaux de feuilles de matière thermoplastique dans lequel on traite intérieurement le tuyau de feuille après l'extrusion par une suspension contenant un agent de séparation et ensuite on aspire la suspension en excès depuis l'intérieur du tuyau et on débarrasse des traces de liquide au moyen de rouleaux d'exprimage le tuyau (5) refroidi extérieurement dans un bain d'eau (4), caractérisé en ce que
— le tuyau de feuille est fabriqué en chlorure de polyvinylidène,
— le tuyau de feuille est traité sur sa face intérieure par une suspension aqueuse,
— qui contient comme agent de séparation du talc, du CaCO$_3$ ou du SiO$_2$,
— en quantités de 20 à 60 % en poids,
— le diamètre moyen de particules de l'agent de séparation étant de 1 à 30 µm et
— le tuyau encore largement fondu étant traité sur sa face interne par la suspension immédiatement après l'extrusion.

2. Procédé selon la revendication 1, caractérisé en ce que la suspension contient l'agent de séparation en quantités de 30 à 40 % en poids.

3. Procédé selon l'une au moins des revendications précédentes, caractérisé en ce que la suspension aqueuse est envoyée dans le tuyau de feuille encore largement fondu à un débit de 0,05 à 0,8 l/min.

4. Procédé selon l'une au moins des revendications précédentes, caractérisé en ce que la suspension aqueuse est envoyée à un débit de 0,15 à 0,5 l/min.

Fig. 1